# EUROPÄISCHE PATENTSCHRIFT

(11) **EP 2 664 470 B1**
(45) Veröffentlichungstag und Bekanntmachung des Hinweises auf die Patenterteilung: **03.10.2018**
(21) Anmeldenummer: 13466006.7
(22) Anmeldetag: 10.05.2013
(51) Int. Cl.: B60D 1/54

(54) **Schwenkbare Anhängerkupplung**
Pivotal trailer coupling
Accouplement de remorque pivotant

(30) Priorität: 16.05.2012 CZ 20120320
(43) Veröffentlichungstag der Anmeldung: 20.11.2013
(73) Patentinhaber: Skoda Auto A.S., 293 60 Mladá Boleslav (CZ)
(72) Erfinder: Penicka, Petr, 51401 Jilemince (CZ); Svoboda, David, Hradec Králové CZ-50004 (CZ)

(56) Entgegenhaltungen:
- WO-A1-98/57813
- DE-A1- 10 347 817
- DE-A1-102006 043 428

## Beschreibung

### Technisches Gebiet

Die Erfindung betrifft eine schwenkbare Anhängerkupplung des Fahrzeuges.

### Bisheriger Stand der Technik

Derzeit werden bei schwenkbaren Anhängerkupplungen mehrfache Arretierungselemente eingesetzt, bei denen ihre Flächenkontakte genutzt werden. Es bestehen verschiedene Lösungsausführungen der mehrfachen Arretierungselemente: Rolle - Nut, Kegelstift - Loch, Kugel - Nut, Kugel - Kegel. Diese bestehenden Elemente werden deshalb mehrfach gebraucht, damit die gegenseitigen Berührungsflächen vergrößert werden.

Bei der Ausführung mit Kugeln ist die Berührung mit dem Gegenstück meistens punktförmig, bei der Ausführung mit den Rollen ist die Berührung linienförmig. In beiden angeführten Ausführungen entstehen enorme Drücke, die sich aus der minimalen Größe der Berührungsflächen ergeben. Durch diese an den Berührungsstellen aufgebauten Drücke werden die Flächen an den Kontaktstellen eingedrückt. Aus diesem Grund müssen auf das Material und die Wärmebehandlung der Berührungsflächen hohe Ansprüche gestellt werden.

Bei der Ausführung mit Kegelflächen ist die Berührungsfläche größer, jedoch steigt der Aufwand der genauen geometrischen Bearbeitung, wo die Koaxialität und gleiche Konizität der Berührungskegel und die Genauigkeit der gegenseitigen Flächen der Arretierungselemente beachtet werden müssen. Der Nachteil der Kegelflächen liegt auch darin, dass sie nur beschränkt die senkrecht zur Kegelachse wirkenden Kräfte übertragen, da bei der Kräftezerlegung die anderen Abschnitte der Berührungsflächen überlastet und praktisch nicht nutzbar sind.

Allgemeiner Nachteil der Lösung mit mehrfachen Arretierungselementen liegt darin, dass man die geometrische Koaxialität der ineinander greifenden Flächen mit der Fertigungsgenauigkeit- nicht sichern kann, sodass bei einigen Lösungen notwendig ist, die Ungenauigkeiten mit zusätzlichen Kompensationselementen zu eliminieren, was die Ausführung verteuert.

Bei mehrfachen Arretierungsmechanismen ist die Festlegung des Wellendrehwinkels zwischen den arretierten Positionen mit gewissen Einschränkungen verbunden. Der Wellendrehwinkel ist durch die Anordnung der Arretierungselemente am Wellenumfang, also durch den Winkel, den die Arretierungselemente einschließen, beeinflusst. Infolgedessen ist der Wellendrehwinkel gleich diesem Winkel oder seinem Vielfachen. Im solchen Fall muss die Vorrichtung mit einem Mechanismus für die Überwindung der nicht arretierten Positionen ausgestattet sein, was den Nachteil der erhöhten Herstellkosten mit sich bringt.

Aus dem Stand der Technik ist Dokument WO 98/578132 A4 bekannt, das eine schwenkbare Anhängerkupplung eines Fahrzeuges mit einem Schwenkmechanismus offenbart. Der Schwenkmechanismus hat ein einziges Arretierungselement, das durch einen Raststift gebildet wird.

### Darstellung der Erfindung

Die genannten Nachteile der bekannten Lösungen werden durch die vorliegende Lösung beseitigt, die eine schwenkbare Anhängekupplung gemäß Anspruch 1 zeigt.

Bei diesem Schwenkmechanismusmechanismus werden für die Kraftübertragung ebene Flächen genutzt. Die ebene Fläche kann bei geeigneter Anordnung für die Kraftübertragung effektiv vollständig genutzt werden und darum entstehen keine ungewollten Kräfte, welche die Deformation der Berührungsflächengeometrie verursachen. Deshalb sind bei diesem Lösung geringere Ansprüche auf die geometrische Genauigkeit bei der Fertigung, was wiederum die Fertigungskosten reduziert.

Weil bei dieser Lösung ein robustes Arretierungselement genutzt wird, steigen die Ansprüche auf die Einbaumaße der Vorrichtung. Aus diesem Grund erfolgt die Handhabung des Arretierungselementes in der zur Wellenachse parallelen Achse, wodurch der Anspruch auf einen größeren Einbauraum eliminiert wird. Der Vorteil der Nutzung eines einzigen Arretierungselementes liegt darin, dass die Welle beliebig zwischen den arretierten Positionen ohne Einfluss auf die Fertigungskosten verstellt werden kann.

### Übersicht der Figuren der Zeichnungen

Die Erfindung wird anhand schematischer Abbildungen näher erläutert, wobei die Fig. 1 eine Explosionszeichnung der schwenkbaren Anhängerkupplung, die Fig. 2 den Schnitt des Mechanismus der schwenkbaren Anhängerkupplung, die Fig. 3 eine perspektivische Ansicht der schwenkbaren Anhängerkupplung in eingerasteten Position, die Fig. 4 eine perspektivische Ansicht der schwenkbaren Anhängerkupplung in einer entsperrten Stellung, die Fig. 5 die schematische Darstellung der schwenkbaren Anhängerkupplung in der Position des Arbeitswinkels, die Fig. 6 die schematische Darstellung der schwenkbaren Anhängerkupplung in der Position des Nullwinkels, die Fig. 7 die schematische Darstellung der schwenkbaren Anhängerkupplung in der Position mit entsperrter Raste und die Fig. 8 die schematische Darstellung der schwenkbaren Anhängerkupplung in einer verschwenkbaren Stellung darstellt.

### Ausführungsbeispiel der Erfindung

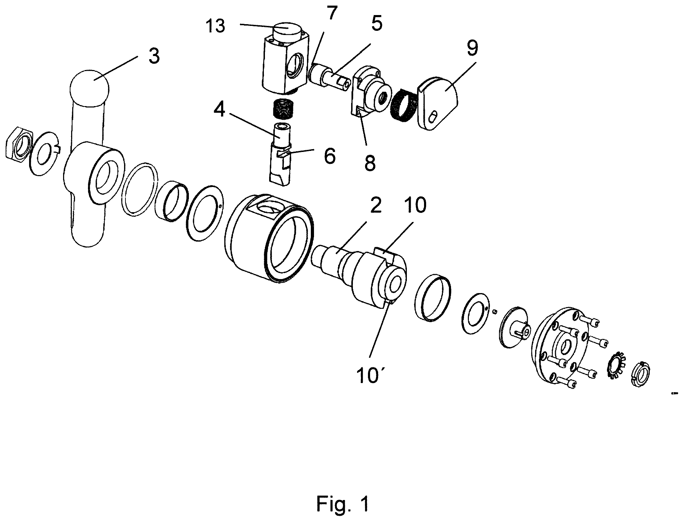

Die technische Lösung der schwenkbaren Anhängerkupplung 1 stellt die Fig. 1 dar, in der perspektivisch die einzelnen Bestandteile der schwenkbaren Anhängerkupplung 1 dargestellt sind.

Der Schwenkmechanismus wird durch eine Welle 2 der schwenkbaren Anhängerkupplung 1 gebildet, die fest mit dem Kugelkopf 3 verbunden ist und die Rastkerben 10 und 10' aufweist, dank der sich die schwenkbare Anhängerkupplung 1 entweder in der ausgefahrenen oder in der eingeschobenen Position befindet. Die Rastkerben 10 und 10' sind an der Scheibe gebildet, die an der Welle 15 des schwenkbaren Anhängerkupplung angeordnet ist.

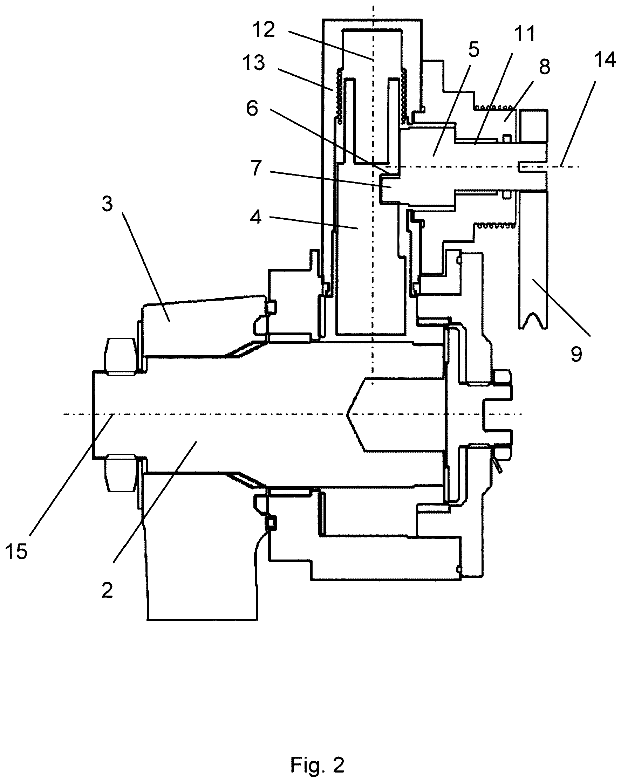

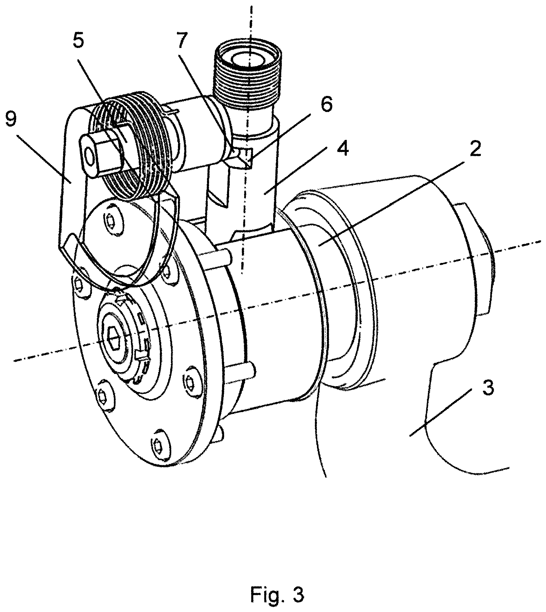

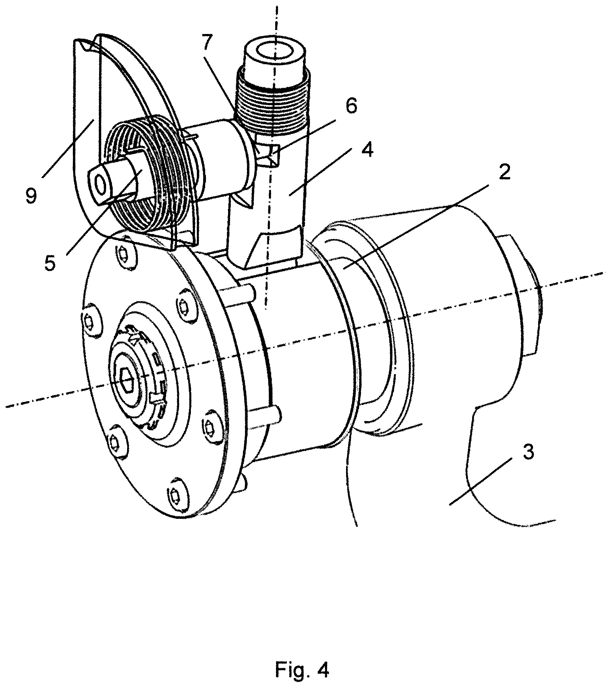

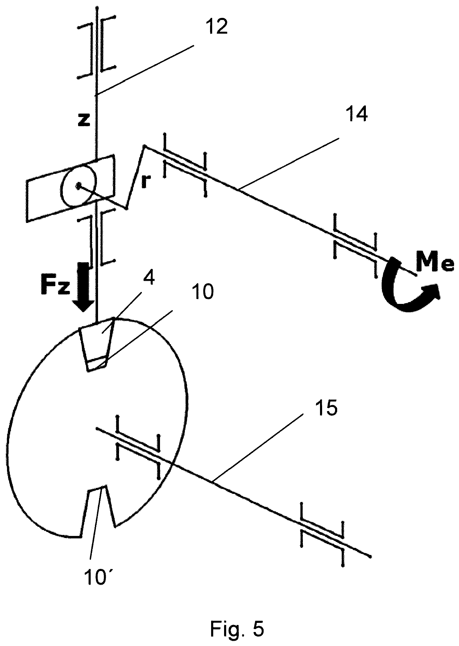

Die Welle 2 der schwenkbaren Anhängerkupplung 1 ist gegen die Versschwenkung mit einem Raststift 4 gesichert, wie der Fig. 3 zu entnehmen ist. Der Raststift 4 greift in die Rastkerbe 10 oder 10' ein und wird durch den Exzenter 5 betätigt. Der Exzenter 5 nutzt seine Rotationsfläche 7, die exzentrisch gegenüber der Drehachse 14 des Exzenters 5 angeordnet ist und in die Führungskulisse 6 eingreift, die am Körper des Raststifts 4 angeordnet ist, wie den Fig. 2, Fig. 3 und Fig. 4 zu entnehmen ist. Das Arretierungselement ist robust und weist ausreichend große Berührungsfläche auf. Der Raststift 4 hat eine Führungskulisse 6 mit einer ausreichend großen ebenen Berührungsfläche. Die Führungskulisse 6 ist senkrecht zu der Längsachse des Raststiftes 4. Die Rotationsfläche 7 des Exzenters 5 ermöglicht die Bewegung des Raststifts 4 in eine eingerastete Stellung gemäß Fig. 3 oder in eine entsperrte Stellung gemäß Fig. 4. Der Arbeitsdrehmoment Me verschwenkt den Exzenter 5 in Richtung der Verstellung des Raststiftes 4 in die Rastkerbe 10 oder 10', wie in der Fig. 5 dargestellt ist.

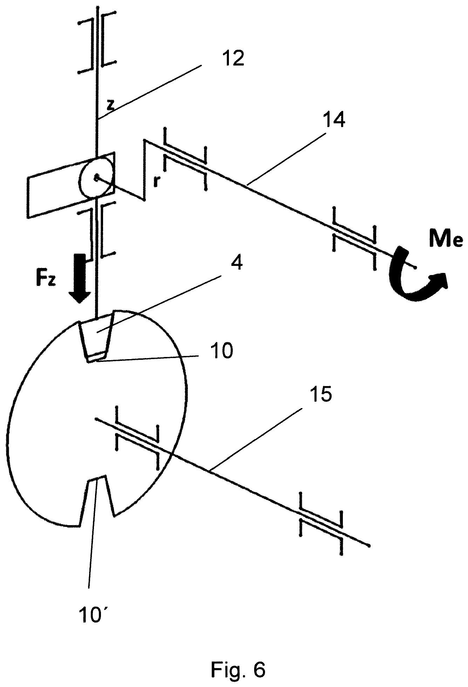

Der Schwenkmechanismus nutzt den kleinen Arbeitswinkel zwischen der Richtung des mit dem Buchstaben r gekennzeichneten Schenkel des Exzenters 5 und der mit dem Buchstaben z gekennzeichneten Achse 12 des Raststifts 4, wie in der Fig. 5 dargestellt ist. In dieser Stellung, die nah dem Nullwinkel ist, nehmen die Reibungskräfte sowie die Kraft Fz nichtlinear zu. Der Nullwinkel stellt den Totpunkt des Mechanismus dar, der in der Fig. 6 dargestellt ist. Die nichtlinear zunehmenden Reibungskräfte verhindern den Kräften der Welle 2 der schwenkbaren Anhängerkupplung 1, den Exzenter 5 in Richtung der Entsperrung des Raststiftes 4 zu verschwenken. Gegen die Entsperrung des Raststiftes 4 wirkt auch die Kraft Fz, welche den Raststift 4 in die Arbeitsstellung schiebt und bestimmt den Spielraum, der durch die Abnutzung der Funktionsflächen des Mechanismus entsteht, wie in der Fig. 5 dargestellt ist. Zur Bestimmung des Spielraums wird das Intervall zwischen dem Arbeitswinkel und dem Nullwinkel genutzt. Die Überschreitung des Nullwinkels würde zu einer Senkung der Kraft Fz führen, deshalb ist die Geometrie der Kulissenführung 6 am Körper des Raststiftes 4 so ausgestaltet, dass die Position des Nullwinkels nicht überschritten werden kann.

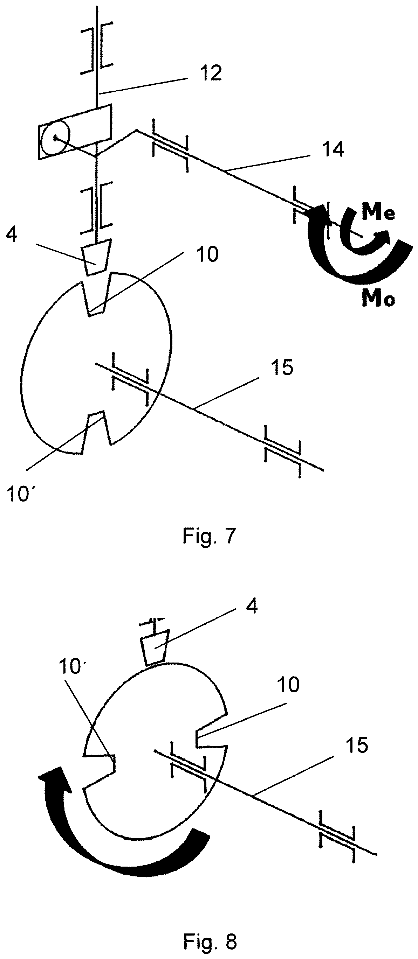

Der Mechanismus der schwenkbaren Anhängerkupplung 1 wird mit einem Bowdenzug aus dem Kofferraum betätigt. Im Kofferraum ist ein Griff mit einer Führungsleiste angeordnet, welche die richtige Position des Griffes im Fahrzeuginterieur und seine Bewegungsbahn sicherstellt. Am Griff ist das Betätigungsseil befestigt. Für die Befestigung des Seils zum Mechanismus der schwenkbaren Anhängerkupplung 1 und zur Umwandlung der durch das Zugseil übertragenen Zugkraft auf den wirkenden Drehmoment Mo dient das Seilsegment 9, das am Ende der Welle 11 des Exzenters 5 angeordnet ist, wie den Fig. 2, Fig. 3 und Fig. 4 zu entnehmen ist. Über das Seilsegment 9 wird mit dem Seil der Exzenter 5 betätigt, der den Raststift 4 bewegt. Bei der Einwirkung des wirkenden Drehmoment Mo auf das Seilsegment 9 und auf die Welle 11 des Exzenters 5 in der Richtung gegen den Arbeitsdrehmoment Me wird der Raststift 4 und somit auch die Welle 2 der schwenkbaren Anhängerkupplung 1 entsperrt, wie in der Fig. 7 dargestellt ist. Die entsperrte Welle 2 der schwenkbaren Anhängerkupplung 1 wird unter der Einwirkung der Schwerkraft auf die Baugruppe der Welle 2 und des Kugelkopfes 3 der schwenkbaren Anhängerkupplung 1 in eine Zwischenlage verschwenkt, wie in der Fig. 8 dargestellt ist. Durch Nachlassen des wirkenden Drehmoments Mo wird die Wirkung des Arbeitsdrehmoments Me wiederhergestellt, der über den Exzenter 5 den Raststift 4 in die Zylinderfläche der Welle 2 drückt. Bei der Verschwenkung der Welle 2 in die entsprechende Position rastet der Raststift 4 in die Rastkerbe 10 oder 10' ein und das Mechanismus wird dadurch in der gewünschten Position versperrt.

### Verwendete Bezeichnungen

- 1: Schwenkbare Anhängerkupplung
- 2: Welle der schwenkbaren Anhängerkupplung
- 3: Kugelkopf der schwenkbaren Anhängerkupplung
- 4: Raste
- 5: Exzenter
- 6: Führungskulisse am Körper des Raststifts
- 7: Rotationsfläche des Exzenters
- 8: Deckel
- 9: Segment für das Seil
- 10, 10': Rastkerbe der Welle
- 11: Welle des Exzenters
- 12: Achse des Raststifts
- 13: Körper des Raststifts
- 14: Drehachse des Exzenters
- 15: Drehachse der Welle der schwenkbaren Anhängerkupplung

## Patentansprüche

1. Schwenkbare Anhängerkupplung (1) eines Fahrzeuges mit einem Schwenkmechanismus mit einem einzigen Arretierungselement, wobei das Arretierungselement durch einen Raststift (4) gebildet ist, wobei der Mechanismus ferner einen Exzenter (5) mit einer exzentrisch gegenüber seiner Drehachse angeordneten Rotationsfläche aufweist, welcher dazu eingerichtet ist, den Raststift (4) zu bewegen, **dadurch gekennzeichnet, dass** der Raststift (4) eine Führungskulisse (6) aufweist, wobei der Exzenter (5) zum Bewegen des Raststifts (4) mit seiner Rotationsfläche (7) in die Führungskulisse (6) des Raststifts (4) eingreift.

2. Schwenkbare Anhängerkupplung (1) des Fahrzeuges nach Anspruch 1 **dadurch gekennzeichnet, dass** der Raststift (4) in einer eingerasteten Stellung in einer Rastkerbe (10, 10') einer Welle (2) der Anhängerkupplung (1) angeordnet ist.

3. Schwenkbare Anhängerkupplung (1) des Fahrzeuges nach einem der vorhergehenden Ansprüche **dadurch gekennzeichnet, dass** in der Führungskulisse (6) eine Rotationsfläche (7) des Exzenters (5) angeordnet ist.

4. Schwenkbare Anhängerkupplung (1) des Fahrzeuges nach Anspruch 3 **dadurch gekennzeichnet, dass** die Rotationsfläche (7) exzentrisch gegenüber einer Drehachse (14) des Exzenters (5) angeordnet ist.

5. Schwenkbare Anhängerkupplung (1) des Fahrzeuges nach einem der vorhergehenden Ansprüche **dadurch gekennzeichnet, dass** sie aus einem Kofferraum betätigbar ist.

6. Schwenkbare Anhängerkupplung (1) des Fahrzeuges nach Anspruch 5 **dadurch gekennzeichnet, dass** im Kofferraum ein Griff und eine Führungsleiste angeordnet sind.

7. Schwenkbare Anhängerkupplung (1) des Fahrzeuges nach Anspruch 6 **dadurch gekennzeichnet, dass** eine Position des Griffes durch die Führungsleiste sichergestellt ist.

8. Schwenkbare Anhängerkupplung (1) des Fahrzeuges nach Anspruch 6 oder 7 **dadurch gekennzeichnet, dass** eine Bewegungsbahn des Griffes durch die Führungsleiste sichergestellt ist.

9. Schwenkbare Anhängerkupplung (1) des Fahrzeuges nach einem der Ansprüche 6 bis 8 **dadurch gekennzeichnet, dass** am Griff ein Zugseil befestigt ist.

10. Schwenkbare Anhängerkupplung (1) des Fahrzeuges nach einem der vorhergehenden Ansprüche **dadurch gekennzeichnet, dass** sie ein Zugseilsegment (9) aufweist.

11. Schwenkbare Anhängerkupplung (1) des Fahrzeuges nach Anspruch 10 **dadurch gekennzeichnet, dass** das Zugseil zum Mechanismus der schwenkbaren Anhängerkupplung (1) mittels des Zugseilsegments (9) befestigt ist.

12. Schwenkbare Anhängerkupplung (1) des Fahrzeuges nach einem der Ansprüche 10 oder 11 **dadurch gekennzeichnet, dass** die Umwandlung der durch das Zugseil übertragenen Zugkraft durch das auf das Zugseilsegment (9) einwirkende Drehmoment erfolgt.

13. Schwenkbare Anhängerkupplung (1) des Fahrzeuges nach einem der Ansprüche 10 bis 12 **dadurch gekennzeichnet, dass** das Zugseilsegment (9) an einem Ende einer Welle (11) des Exzenters (5) angeordnet ist.

14. Schwenkbare Anhängerkupplung (1) des Fahrzeuges nach einem der Ansprüche 9 bis 13 **dadurch gekennzeichnet, dass** sie mittels des Zugseils bewegbar ist.

## Claims

1. Pivoting trailer hitch (1) of a vehicle with a pivoting mechanism with a single locking element, wherein the locking element is formed by a locking pin (4), wherein the mechanism further comprises an eccentric (5) with a surface of revolution arranged eccentrically with respect to its axis of rotation and which is arranged to move the locking pin (4), **characterized in that** the locking pin (4) has a guide slot (6), wherein the eccentric (5) for moving the locking pin (4) through its surface of revolution (7) engages in the guide slot (6) of the locking pin (4).

2. Pivoting trailer hitch (1) of the vehicle according to claim 1, **characterized in that** the locking pin (4) is arranged in a notch (10, 10') of a shaft (2) of the trailer hitch (1) in the locked position.

3. Pivoting trailer hitch (1) of the vehicle according to one of the preceding claims, **characterized in that** a surface of revolution (7) of the eccentric (5) is arranged in the guide slot (6).

4. Pivoting trailer hitch (1) of the vehicle according to claim 3, **characterized in that** the surface of revolution (7) is arranged eccentrically with respect to the axis of rotation (14) of the eccentric (5).

5. Pivoting trailer hitch (1) of the vehicle according to one of the preceding claims, **characterized in that** it may be actuated from the trunk.

6. Pivoting trailer hitch (1) of the vehicle according to claim 5, **characterized in that** a handle and a guide rail are arranged in the trunk.

7. Pivoting trailer hitch (1) of the vehicle according to claim 6, **characterized in that** the position of the handle is ensured by the guide rail.

8. Pivoting trailer hitch (1) of the vehicle according to claim 6 or 7, **characterized in that** a movement path of the handle is ensured by the guide rail.

9. Pivoting trailer hitch (1) of the vehicle according to one of the claims 6 to 8, **characterized in that** a pull cable is attached to the handle.

10. Pivoting trailer hitch (1) of the vehicle according to one of the preceding claims, **characterized in that** it comprises a pull cable segment (9).

11. Pivoting trailer hitch (1) of the vehicle according to claim 10, **characterized in that** the pull cable is attached to the mechanism of the pivoting trailer hitch (1) by means of the pull cable segment (9).

12. Pivoting trailer hitch (1) of the vehicle according to one of the claims 10 or 11, **characterized in that** the conversion of the pulling force transmitted through the pull cable is effected by the torque acting on the pull cable segment (9).

13. Pivoting trailer hitch (1) of the vehicle according to one of the claims 10 to 12, **characterized in that** the pull cable segment (9) is arranged at one end of a shaft (11) of the eccentric (5).

14. Pivoting trailer hitch (1) of the vehicle according to one of the claims 9 to 13, **characterized in that** it is movable by means of the pull cable.

## Revendications

1. Attelage de remorque (1) pivotant d'un véhicule, avec un mécanisme de pivotement avec un élément de blocage unique, l'élément de blocage étant formé par une broche d'encliquetage (4),
le mécanisme présentant en outre un excentrique (5), doté d'une surface de rotation disposée de façon excentrée par rapport à son axe de rotation, lequel est agencé pour déplacer la broche d'encliquetage (4), **caractérisé en ce que** la broche d'encliquetage (4) présente une coulisse de guidage (6), l'excentrique (5) engrenant, avec sa surface de rotation (7), dans la coulisse de guidage (6) de la broche d'encliquetage (4) pour le déplacement de la broche d'encliquetage (4).

2. Attelage de remorque (1) pivotant du véhicule selon la revendication 1, **caractérisé en ce que,** dans une position encliquetée, la broche d'encliquetage (4) est disposée dans une encoche d'encliquetage (10, 10') d'un arbre (2) de l'attelage de remorque (1).

3. Attelage de remorque (1) pivotant du véhicule selon l'une des revendications précédentes, **caractérisé en ce qu'**une surface de rotation (7) de l'excentrique (5) est disposée dans la coulisse de guidage (6).

4. Attelage de remorque (1) pivotant du véhicule selon la revendication 3, **caractérisé en ce que** la surface de rotation (7) est disposée de façon excentrée par rapport à un axe de rotation (14) de l'excentrique (5).

5. Attelage de remorque (1) pivotant du véhicule selon l'une des revendications précédentes, **caractérisé en ce qu'**il peut être actionné à partir d'un coffre à bagages.

6. Attelage de remorque (1) pivotant du véhicule selon la revendication 5, **caractérisé en ce qu'**une poignée et une barrette de guidage sont disposées dans le coffre à bagages.

7. Attelage de remorque (1) pivotant du véhicule selon la revendication 6, **caractérisé en ce qu'**une position de la grille est assurée par la barrette de guidage.

8. Attelage de remorque (1) pivotant du véhicule selon la revendication 6 ou 7, **caractérisé en ce qu'**une trajectoire de déplacement de la poignée est assurée par la barrette de guidage.

9. Attelage de remorque (1) pivotant du véhicule selon l'une des revendications 6 à 8, **caractérisé en ce qu'**un câble de traction est fixé sur la poignée.

10. Attelage de remorque (1) pivotant du véhicule selon l'une des revendications précédentes, **caractérisé en ce qu'**il présente un segment de câble de traction (9).

11. Attelage de remorque (1) pivotant du véhicule selon la revendication 10, **caractérisé en ce que** le câble de traction est fixé au mécanisme de l'attelage de remorque (1) au moyen du segment de câble de traction (9).

12. Attelage de remorque (1) pivotant du véhicule selon l'une des revendications 10 ou 11, **caractérisé en ce que** la conversion de la force de traction transmise par le câble de traction s'effectue par le couple agissant sur le segment de câble de traction (9).

13. Attelage de remorque (1) pivotant du véhicule selon l'une des revendications 10 à 12, **caractérisé en ce que** le segment de câble de traction (9) est disposé à une extrémité d'un arbre (11) de l'excentrique (5).

14. Attelage de remorque (1) pivotant du véhicule selon l'une des revendications 9 à 13, **caractérisé en ce qu'**il peut être déplacé au moyen du câble de traction.
